Europäisches Patentamt

European Patent Office

Office européen des brevets

(11) Veröffentlichungsnummer: **0 237 055**

**A2**

(12) **EUROPÄISCHE PATENTANMELDUNG**

(21) Anmeldenummer: **87103543.2**

(22) Anmeldetag: **11.03.87**

(51) Int. Cl.4: **A01N 59/26** , A01N 25/32 , A62D 3/00 , A01M 17/00 , B01J 27/08

(30) Priorität: **12.03.86 DE 3608256**

(43) Veröffentlichungstag der Anmeldung: **16.09.87 Patentblatt 87/38**

(84) Benannte Vertragsstaaten: **AT BE CH DE ES FR GB GR IT LI LU NL**

(71) Anmelder: **DETIA FREYBERG GMBH Dr.-Werner-Freyberg-Str. 11 6947 Laudenbach/Bergstrasse(DE)**

(72) Erfinder: **Friemel, Wolfgang, Dr. Giessener Strasse 4 D-6148 Heppenheim(DE)** Erfinder: **Barth, Volker, Dr. Dirmsteiner Weg 47 D-6700 Ludwigshafen 2(DE)** Erfinder: **Münzel, Martin, Dr. Röderweg 15a D-6140 Bensheim(DE)** Erfinder: **Ehret, Reiner Forlenweg 14 D-6940 Weinheim(DE)**

(74) Vertreter: **Weinhold, Peter, Dr. et al Patentanwälte Dr. V. Schmied-Kowarzik Dipl.-Ing. G. Dannenberg Dr. P. Weinhold Dr. D. Gudel Dipl.-Ing. S. Schubert Dr. P. Barz Siegfriedstrasse 8 D-8000 München 40(DE)**

(54) Begasungsverfahren.

(57) Die vorliegende Erfindung betrifft Verfahren zur Begasung von landwirtschaftlichen Vorräten in Lager-oder Transporträumlichkeiten zur Schädlingsbekämpfung mit Phosphorwasserstoff, wobei dieser weitgehendst gebunden und/oder zerstört wird, bei dem das Phosphorwasserstoff entwickelnde Begasungsmittel in an sich bekannter Weise in die Vorräte in üblichen Vorratslagern eingebracht wird, worauf diese mit flexiblen Folien abgedeckt werden und somit eine Abgrenzung der Vorräte gegenüber dem Vorratsraum geschaffen wird, und der während der Begasung oder im Anschluß an die Begasung aus dem Gasraum über bzw. zwischen den Vorräten ausgetretene Phosphorwasserstoff durch Adsorption, physikalische oder chemische Absorption gebunden und/oder auf chemischem oder physikalischem Wege zerstört wird.

Ferner betrifft die Erfindung einen bestimmten Feststoff-Katalysator für die Zerstörung von Phosphorwasserstoff.

Die vorliegende Erfindung betrifft ein Verfahren zur Begasung von landwirtschaftlichen Vorräten in Lager-oder Transporträumlichkeiten zur Schädlingsbekämpfung mit Phosphorwasserstoff, wobei dieser weitgehends gebunden und/oder zerstört wird.

Seit nunmehr etwa fünfzig Jahren hat sich im Vorratsschutz Phosphorwasserstoff als Begasungsmittel zur Schädlingsbekämpfung außerordentlich bewährt. Aufgrund seiner guten Wirkung auf die zu bekämpfenden Schädlinge, der einfachen Handhabung von entsprechenden Zusammensetzungen und des umweltfreundlichen Charakters von den nach der Ausgasung zurückbleibenden Rückständen -um nur einige Vorteile zu nennen - haben sich Phosphorwasserstoff entwickelnde Handelspräparate weltweit durchgesetzt.

Derartige Begasungspräparate enthalten als Hauptbestandteil ein Metallphosphid, wie Aluminiumphosphid oder Magnesiumphosphid, das unter dem Einfluß von Luft-oder Warenfeuchtigkeit unter Bildung von Phosphorwasserstoff hydrolysiert. Daneben können die Begasungsmittel noch andere Bestandteile enthalten, welche die Entwicklungsgeschwindigkeit von Phosphorwasserstoff in der gewünschten Weise beeinflussen, die Sicherheit, insbesondere bei Zutritt von flüssigem Wasser, erhöhen,die Konzentration an Phosphin im entstehenden Gas herabsetzen,den Ausgasungsgrad erhöhen etc. Es ist eine Vielzahl von zur Schädlingsbekämpfung geeigneten, phosphinfreisetzenden Zusammensetzungen bekannt, und diese können selbstverständlich ohne Einschränkung beim erfindungsgemäßen Verfahren eingesetzt werden. Das gilt auch für die Form der Begasungspräparate, welche beispielsweise als Tabletten, Pellets oder als Pulver in geeigneten Einfach-oder Mehrfachbeuteln vorliegen können.

Begasungsverfahren der hier vorliegenden Art dienen vor allem zur Vernichtung von Schädlingen in landwirtschaftlichen Vorräten, wie Futtermitteln, Getreide, Bohnen, Erdnüssen und Tabak in üblichen Vorratsräumen oder Transporträumlichkeiten, wie Eisenbahnwagons, Kähnen und Schiffen.

Bei den zu bekämpfenden Schädlingen kann es sich z.B. um Nagetiere, aber insbesondere um Insekten, wie Kornkäfer, Getreidekapuziner, Getreideplattkäfer, Getreidebohrer,Reiskäfer, Reismehlkäfer und andere sowie auch Motten handeln.

Bisher wurde bei einem typischen Verlauf der Begasung wie folgt vorgegangen: Zunächst wurde Sorge getragen, daß der Lagerraum für die zu begasenden Vorräte gegenüber dem entstehenden Phosphin ausreichend dicht war, und danach wurde das Begasungsmittel ausgelegt. Nach dem Verlassen des Lagerraumes durch die an der Auslegung beteiligten Personen mußten dann noch die dafür notwendigen Öffnungen abgedichtet werden. Danach wartete man eine ausreichende Einwirkungszeit des Phosphorwasserstoffs ab, worauf man den Lagerraum zur Entfernung des Phosphorwasserstoffs aus dem Vorratsraum ausgiebig lüften mußte.

Im Gegensatz zu den bei der Begasung aus dem Begasungsmittel entstehenden Folgeprodukten, welche bei vollständiger Ausgasung für die Umwelt (einschließlich der Menschen) völlig gefahrlos sind, ist Phsophorwasserstoff auch für Säugetiere und den Menschen stark toxisch. Ferner hat Phosphorwasserstoff einen intensiven und sehr unangenehmen knoblauchartigen Geruch, wobei die Geruchsschwelle bei etwa 0,02 ppm, also außerordentlich tief,liegt. Je nach der Anwendungsmethode und Sorgfalt bei der Abdichtung kann es leicht zu einem Entweichen von Phosphorwasserstoff aus dem Vorratsraum in die Umwelt kommen und zur unzumutbaren Belästigung, wenn nicht sogar Schädigung von Menschen in der Nähe des Begasungsobjektes führen. Da die Konzentrationshöhe des Phosphins mit der Nase nicht festgestellt werden kann, kann plötzlich auftretender Phosphingeruch (selbt unterhalb der in Deutschland zulässigen Werte) zu Angstgefühlen und - bei besonders sensiblen Menschen auch zu körperlichem Unwohlsein führen. Dieses gilt selbstverständlich auch, wenn bei der bisher vorgesehenen Lüftung des Vorratsraumes sich Menschen zu schnell in die Nähe des Lagerraumes begeben haben. Weiterhin ist es selbstverständlich im Sinne des anzustrebenden, möglichst weitgehenden Emissionsschutzes daran zu arbeiten, möglichst wenig Phosphorwasserstoff in die Umwelt auszustoßen. Aufgabe der vorliegenden Erfindung ist es also, ein Verfahren zur Begasung von landwirtschaftlichen Vorräten zu schaffen, bei dem es vermieden wird, daß der für die Begasung eingesetzte Phosphorwasserstoff in die Umwelt austritt und zu einer Beunruhigung oder sogar Belästigung der Bevölkerung führt.

Gegenstand der Erfindung ist ein Verfahren zur Begasung von landwirtschaftlichen Vorräten in Lager-oder Transporträumlichkeiten zur Schädlingsbekämpfung mit Phosphorwasserstoff, wobei dieser weitgehendst gebunden und/oder zerstört wird, das dadurch gekennzeichnet ist, daß das Phosphorwasserstoff entwickelnde Begasungsmittel in an sich bekannter Weise in die Vorräte in den üblichen Vorratslagern eingebracht wird, worauf diese mit flexiblen Folien abgedeckt werden und somit eine Abgrenzung der Vorräte gegenüber dem Vorratsraum geschaffen wird, und der während der Begasung oder im Anschluß an die Begasung aus dem Gasraum über bzw. zwischen den Vorräten ausgetretene Phosphorwasserstoff durch Adsorption, physikalische oder chemische Absorption gebunden und/oder auf chemischem oder physikalischem Wege zerstört wird.

Die Anwendung der phosphidhaltigen Begasungsmittel kann je nach der vorliegenden Handelsform von diesen in völlig konventioneller Weise erfolgen. So können beispielsweise Metallphosphid-enthaltende Zusammensetzungen in Pulveroder Granulatform, welche sich vorverpackt in porösen Einzelbeuteln oder einer Anordnung zusammenhängender Beutel befinden, manuell oder mit manuell bedienten mechanischen Vorrichtungen in möglichst gleichmäßiger Verteilung in das Innere des Lagerguts eingeführt werden, wobei es zweckmäßig ist, daß die Beutel beispielsweise mittels Ösen am Beutelende auf Schnüre aufgereiht und festgebunden sind. Es sind aber auch bereits sehr praktische Anwendungsvorrichtungen beschrieben worden, die eine Vielzahl von entsprechenden Beuteln in zusammenhängender aufgerollter bzw. aufgefalteter Form aufweisen, welche zur Anwendung in einfacher Weise entfaltet bzw. abgespult werden können. Alle diese Anwendungsformen von Begasungsmitteln sind also erfindungsgemäß anwendbar.

Die nachfolgende Abdeckung der Vorratslager mit flexiblen Folien soll anhand einer speziellen Anwendungsform der vorliegenden Erfindung, nämlich der Begasung von Getreidelagern, näher erläutert werden: Derartige Getreidevorräte werden sehr oft in großen, Holzwände aufweisenden Lagerungsbehältern gelagert. Selbstverständlich ist jedoch das erfindungsgemäße Verfahren auch bei Vorliegen von auf dem Boden des Lagerraumes liegenden Getreidehaufen leicht anwendbar. Es kommt lediglich darauf an, daß die Vorräte zumindest an den Seiten des Haufens, an denen ein leichter Gasaustausch stattfinden könnte, unter Verwendung von mindestens einer Folie abgedeckt werden. Durch die so geschaffene Abgrenzung der Vorräte gegenüber dem Vorratsraum wird der Gasaustausch, also auch der Austritt von Phosphorwasserstoff in den Vorratsraum, mehr oder weniger stark behindert.

Grundsätzlich sind zwei verschiedene Fälle denkbar, welche erfindungsgemäß vorliegen können:
Die Behinderung des Gasaustausches zwischen dem Gasraum über (bzw. in) den Vorräten und dem Vorratsraum kann derart geregelt werden, daß das Phosphin im Laufe der mehrtägigen bzw. mehrwöchigen Begasung praktisch vollständig aus dem Gasraum über den Vorräten in den Vorratsraum ausgetreten ist, wobei es dort in der angegebenen Weise gebunden und/oder zerstört wurde. Ein anderer Grenzfall wäre eine möglichst hermetische Abdichtung des Gasraums über den Vorräten, so daß die Bindung und/oder Zerstörung des in diesem noch vorhandenen Phosphorwasserstoffs im wesentlichen erst nach Abschluß der Begasung erfolgt. Die letztgenannte Ausführungsform wird erfindungsgemäß bevorzugt.

Selbstverständlich sind jegliche denkbare Übergangsformen zwischen den genannten Arbeitsprinzipien denkbar.

Die bei der Abdeckung zu treffenden Maßnahmen sowie die Wahl des Materials für die flexiblen Folien hängen von dem Ausmaß der gewünschten Behinderung des Gasaustausches zwischen dem Gasraum über den Vorräten und dem Vorratsraum ab. Ein wesentliches Kriterium des Materials für die Folien ist lediglich ein inertes Verhalten gegenüber dem Begasungsmittel und den Vorräten und eine genügend große Biegsamkeit, so daß eine zufriedenstellende Abdeckung des Geteidehaufens oder anderer zu begasender Vorräte gewährleistet ist. Es befindet sich ein sehr großes Angebot an geeigneten Kunststofffolien auf dem Markt, welche unterschiedliche Werte der Gasdurchlässigkeit aufweisen. Man kann also das Ausmaß des Gasaustausches zwischen dem Gasraum über dem Vorrat und dem Vorratsraum bereits durch eine entsprechende Auswahl unter den handelsüblichen Kunststofffolien im großen Rahmen regeln.

Bei Verwendung von mehreren nebeneinandergelegten Folienbahnen wird darauf geachtet, daß sich die Ränder von diesen überlappen. Wird eine Erhöhung der Dichtigkeit der Abdeckung angestrebt, so ist es in einfacher Weise möglich, die sich überlappenden Teile der Folienbahnen mit einem geeigneten Klebsstoff zu versehen, wobei viele geeignete Klebstoffpräparate im Handel erhältlich sind.

Bei Vorliegen von auf dem Boden gelagerten Getreidehaufen wird die Abdeckung zweckmäßig über die untere Begrenzung des Getreidehaufens noch eine genügend große Strecke am Boden des Lagerraumes entlanggeführt, damit an dieser Stelle keine zu großen Räume mit ungehindertem oder wenig gehindertem Gasaustausch entstehen. Selbstverständlich kann auch an dieser Stelle eine temporäre Abdichtung mittels eines Klebemittels unter Verbindung der Folie mit dem Boden des Lagerraumes geschaffen werden. Dasselbe gilt sinngemäß selbstverständlich auch für Seitenflächen von Lagerungsbehältern etc.

Sofern eine dichte oder nahezu dichte Abgrenzung des Gasraumes über (bzw. zwischen)den Vorräten von dem Vorratsraum geschaffen wird, ist es zweckmäßig, eine Möglichkeit vorzusehen, den Gasraum über den Vorräten nach Beendigung der Ausgasung abzusaugen und bei der Gelegenheit den noch vorhandenen Phosphorwasserstoff in der hier beschriebenen Weise zu binden oder zu zerstören.

Es wurde bereits darauf hingewiesen, daß der aus dem Gasraum über den Vorräten ausgetretene Phosphorwasserstoff erfindungsgemäß gebunden und/oder zerstört wird. Es ist eine große Anzahl von Methoden der Adsorption, chemischen oder physikalischen Absorption und der Zerstörung von Phosphorwasserstoff auf chemischem oder physikalischem Wege bekannt, so daß an dieser Stelle eine kurze ZUsammenfassung derartiger Methoden ausreichend sein sollte.

Zur Adsorption von Phosphorwasserstoff sind eine ganze Reihe von Materialien mit großer Oberfläche verwendbar. Beispiele derartiger Materialien sind Aktivkohle, Molekularsiebe, Kieselgel oder Aluminiumhydroxid, welches vorzugsweise in Pelletform vorliegt.

Eine Phosphinabsorption kann beispielsweise in flüssigen Medien erfolgen. Hierfür geeignet sind beispielsweise Cyclohexanol, Isopropanol, Methanol oder pflanzliche Öle.

Es ist bekannt, daß gewünschtenfalls die beladenen Absorptions-oder -Adsorptionsmittel oft durch Auswaschen, Erwärmen, Druckverminderung oder auf andere übliche Weise vom Phosphin befreit und wieder verwendet werden können. Dieses kann selbstverständlich in geschlossenen Vorrichtungen durchgeführt werden, so daß das hierbei freigesetzte Phosphin keinerlei Belästigung oder Gefährdung mehr darstellt.

Eine Zerstörung von Phosphorwasserstoff ist auf chemischem oder physikalischem Wege möglich. Die chemische Zerstörung von PHosphin wird in erster Linie oxidativ durchgeführt. Dafür sind dem Fachmann bereits eine größere Anzahl von Oxidationsmittel bekannt, von denen lediglich Kuper-I-oxid, Alkali-oder Erdalkalihyoochlorit, insbesondere Natriumhypochlorit bzw. Kaliumhypochlorit oder Kaliumpermanganat genannt werden sollen.

Bei der chemischen Zerstörung von Phosphin ist oft die Verwendung von Katalysatoren sehr vorteilhaft, von denen ebenfalls eine ganze Reihe bekannt ist. So ist beispielsweise eine mit Verbindungen von bestimmten Übergangsmetallen imprägnierte Aktivkohle zur oxidativen Zerstörung von Phosphin außerordentlich gut geeignet. Es ist auch bekannt, daß die derart imprägnierte Aktivkohle vor ihrer Verwendung als Katalysator einer Wärmebehandlung unterworfen werden kann, um das zur Imprägnierung verwendete Metallsalz, wie Kupfersulfat, in das betreffende Oxid zu verwandeln.

Erfindungsgemäß wurde des weiteren gefunden, daß zur oxidativen Zerstörung von Phosphorwasserstoff mit Alkalijodid imprägnierte Aktivkohle ausgezeichnete Ergebnisse liefert. Als Alkalijodid werden vorzugsweise Kaliumjodid oder Natriumjodid verwendet. Der imprägnierte Aktivkohle-Katalysator enthält zweckmäßig 0,1 bis 4 Gew.-%, vorzugsweise 1 bis 2 Gew.-% an Kaliumjodid. Derartige mit einem Alkalijodid imprägnierte Aktivkohle ist ebenfalls Gegenstand der vorliegenden Erfindung.

Bei derartigen chemischen Zerstörungen von Phosphin findet dessen Oxidation unter der Einwirkung von Luftsauerstoff statt, welche durch die angegebenen Katalysatoren gefördert wird.

Sofern am Begasungsort eine entsprechende Apparatur zur Verfügung steht, kann in an sich bekannter Weise der Phosphorwasserstoff auch auf physikalischem Wege, insbesondere durch Strahlung, z.B. UV-Strahlung, thermische Einwirkung oder elektrische Einwirkung zerstört werden, wobei in den Fällen, in denen Störungen oder Beeinträchtigungen aufgrund der erhaltenen Abbauprodukte zu erwarten sind, diese in an sich bekannter Weise weiter umgesetzt werden können.

Nach einer speziellen Ausführungsform des erfindungsgemäßen Verfahrens kann im Vorratsraum eine Luftzirkulation vorgesehen werden, wobei eine komplette Umwälzung unterhalb einer Stunde, in der Größenordnung von einer oder mehreren Stunden oder von 10 bis 24 Stunden veranlaßt wird.

Selbstverständlich ist es nicht notwendig, daß der aus dem Luftraum über den Vorräten ausgetretene Phosphorwasserstoff im Vorratsraum gebunden und/oder zerstört wird. Es kann vielmehr eine Gasreinigungsanlage außerhalb von diesem vorgesehen sein, sofern Vorkehrungen dafür getroffen sind, daß Luft aus dem Vorratsraum abgesaugt und durch eine Gasreinigungsanlage geleitet und danach gereinigt in die Umwelt entlassen werden kann.

Selbstverständlich ist es möglich, daß der Gasraum über den Vorräten nicht nur am Ende der Begasung abgesaugt und durch eine Gasreinigungsanlage zum Binden und/oder Zerstören des Phosphorwasserstoffs geleitet wird, sondern daß auch während des Begasungsverfahrens durch Ableitung von Gas und nachfolgender Zuführung von diesem zu einer Gasreinigungsanlage ein leichter Unterdruck im Gasraum über den Vorräten bzw. im Vorratsraum selbst erzeugt wird. Dadurch wird das Austreten von phosphinhaltigen Gasen an anderer Stelle reduziert oder verhindert.

Es versteht sich von selbst, daß es besonders vorteilhaft ist, wenn das Verfahren kontinuierlich, d.h. ohne Unterbrechung bis zur vollständigen Entfernung des Phosphorwasserstoffs durchgeführt wird.

Eine erfindungsgemäß verwendbare Gasreinigungsanlage kann aus einem Ventilator, dem in einer besonders vorteilhaften Ausführungsform eine Drosselklappe vorgeschaltet ist, Verbindungsrohren und einem oder vorzugsweise mehreren Betten mit zur Bindung oder Zerstörung des Phosphorwasserstoffes wirksamer Substanz, insbesondere mit einem Katalysator bestehen. Dabei sollte zur effektivsten Ausnutzung der wirksamen Substanz deren Schüttung möglichst gLeichmäßig sein. Es sind Strömungsgeschwindigkeiten des zu reinigenden Gases von 0,1 bis 0,5 m/s, beispielsweise 0,32 m/s zweckmäßig. Bei Verwendung eines Katalysators aus imprägnierter Aktvkohle kann die Verweilzeit der Luft im Katalysator etwa 0,16 bis 0,8, beispielsweise 0,25 s betragen Eine geeignete Katalysator-Schichtdicke liegt bie 40 bis 120 mm, beispielsweise 80 mm. Bei einer derartigen Arbeitsweise beträgt der Strömungsdruckverlust 3,25 Pa/mm bei 0,32 m/s.

Das erfindungsgemäße Verfahren wird durch das folgende Beispiel näher erläutert.

Beispiel:

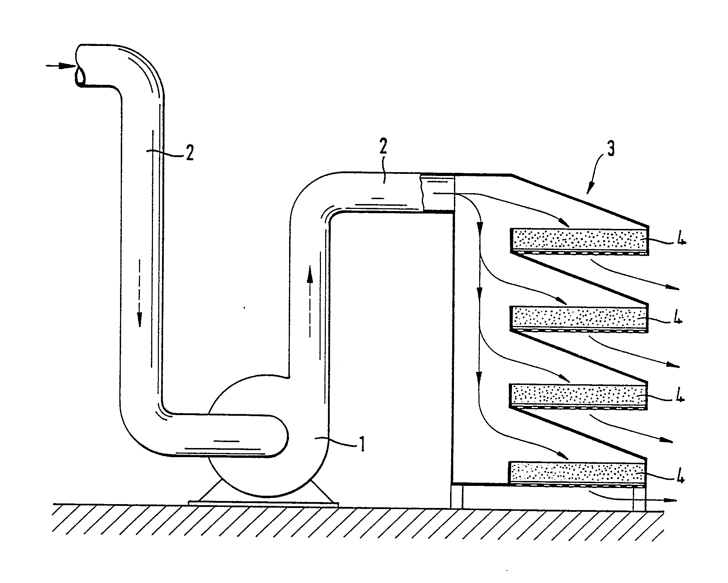

Es wird eine Gasreinigungsanlage verwendet, wie sie in der Zeichnung dargestellt ist. Diese besteht aus einem Ventilator (1), Verbindungsrohren (2) sowie dem Katalysator (3) und Kohleschüttungen (4). Diese Zeichnung ist eine - schematische Darstellung und gibt nicht die verwendete Anzahl an Katalysatorbetten wieder.

Die imprägnierte Aktivkohle liegt als Festbettschüttung vor. Als Stützkonstruktion wird ein Lochbett (5 mm-Lochung) mit einer Flauschvliesauflage aus PP eingesetzt. Die Abluft durchströmt die Schüttung mit einer Geschwindigkeit von 0,28 m/s; bei der Schütthöhe von 80 mm ergibt sich eine Verweilzeit von 0,29 s.

Die Katalysatorflächen kann durch Aufeinandersetzen von Kasetten beliebig gewählt werden. Es wurden 2 Stapel mit jeweils 6 Kasetten und 1 Anfangs-und 1 Endstück eingesetzt. In jeder Kasette befinden sich 30 kg Kohle auf 1 m² Fläche.

Die eingesetzte Aktivkohle enthält 2 % KJ. In dem Reingas war kein $PH_3$ mehr nachweisbar, d.h. nach derzeitigen Meßmethoden lag der $PH_3$-Gehalt immer unterhalb von 0,5 ppb und dies auch bei Rohgaskonzentrationen von einigen hundert ppm.

Das Oxidationsprodukt ($P_2O_5$) lagert sich auf der Kohle ab und wirkt hygroskopisch. Bei sehr feuchtem Gas (80 -90 %) entsteht zähflüssige Phosphorsäure, welche die Poren der Aktivkohle verstopfen kann, wenn sie in ausreichender Menge vorhanden ist. Eine auf diese Weise begrenzte Ladung beträgt 65 g $PH_3$/100 g Aktivkohle. Bei einer Dimensionierung der Katalysatoren wurde von dieser Beladung ausgegangen und zusätzlich 100 % Reserve eingeplant.

Zur Entfernung der entstehenden Phosphorsäure ist also zu gegebener Zeit entweder ein Ersetzen des Katalysators oder eine Regenerierung von diesem, beispielsweise durch Auswaschen, notwendig.

## Ansprüche

1. Verfahren zur Begasung von landwirtschaftlichen Vorräten in Lager-oder Transporträumlichkeiten zur Schädlingsbekämpfung mit Phosphorwasserstoff, wobei dieser weitgehendst gebunden und/oder zerstört wird, dadurch gekennzeichnet,daß das Phosphorwasserstoff entwickelnde Begasungsmittel in an sich bekannter Weise in die Vorräte in üblichen Vorratslagern eingebracht wird, worauf diese mit flexiblen Folien abgedeckt werden und somit eine Abgrenzung der Vorräte gegenüber dem Vorratsraum geschaffen wird, und der während der Begasung oder im Anschluß an die Begasung aus dem Gasraum über bzw. zwischen den Vorräten ausgetretene Phosphorwasserstoff durch Adsorption, physikalische oder chemische Absorption gebunden und/oder auf chemischem oder physikalischem Wege zerstört wird.

2. Verfahren nach Anspruch 1, dadurch gekennzeichnet, daß die Adsorption des Phosphorwasserstoffs durch adsorptive Bindung an Aktivkohle, Molekularsieben, Kieselgel oder -vorzugsweise in Pelletform vorliegendes -Aluminiumhydroxid durchgeführt wird.

3. Verfahren nach Anspruch 1, dadurch gekennzeichnet, daß die Absorption des Phosphorwasserstoffs in Cyclohexanol, Isopropanol, Methanol oder pflanzlichen Ölen durchgeführt wird.

4. Verfahren nach Anspruch 1, dadurch gekennzeichnet, daß der Phosphorwasserstoff im Vorratsraum durch Oxidation, gegebenenfalls unter Erwärmung, zerstört wird.

5. Verfahren nach Anspruch 4, dadurch gekennzeichnet, daß als Oxidationsmittel ein Feststoff, insbesondere Kupfer-I-oxid, Alkali-oder Erdalkalihypochlorit, insbesondere Natriumhypochlorit oder Kaliumhypochlorit oder Kaliumpermanganat verwendet wird.

6. Verfahren nach Anspruch 1, dadurch gekennzeichnet, daß der Phosphorwasserstoff unter Verwendung eines Feststoffkatalysators, insbesondere imprägnierter Aktivkohle, zerstört wird.

7. Verfahren nach Anspruch 6, dadurch gekennzeichnet, daß als imprägnierte Aktivkohle eine solche verwendet wird, die mit einem Alkalijodid, vorzugsweise Kaliumjodid oder Natriumjodid, Kupfersulfat, Eisensulfat oder einem Alkalichromat oder -dichromat imprägniert worden ist.

8. Verfahren nach Anspruch 1, dadurch gekennzeichnet, daß der Phosphorwasserstoff auf physikalischem Wege, insbesondere durch Strahlung, insbesondere UV-Strahlung, thermische Einwirkung oder elektrische Einwirkung zerstört wird, wobei gegebenenfalls die erhaltenen Abbauprodukte in an sich bekannter Weise weiter umgesetzt werden.

9. Verfahren nach Anspruch 1 bis 8, dadurch gekennzeichnet, daß im Vorratsraum eine Luftzirkulation veranlaßt wird, wobei man vorzugsweise mit Umwälzraten bis zu 24 Stunden arbeitet.

10. Verfahren nach Anspruch 1 bis 9, dadurch gekennzeichnet, daß der ausgetretene Phosphorwasserstoff in einer außerhalb von dem Vorratsraum befindlichen Gasreinigungsanlage gebunden und/oder zerstört wird, ihdem Luft aus dem Vorratsraum durch die Gasreinigungsanlage geleitet und dann gereinigt in die Umwelt entlassen wird.

11. Verfahren nach Anspruch 1 bis 10, dadurch gekennzeichnet, daß Bindung und/oder Zerstörung des Phosphorwasserstoffs durch örtliche Partialdruckerniedrigung gefördert wird.

12. Verfahren nach Anspruch 1 bis 11, dadurch gekennzeichnet, daß die Abdeckung durch sich überlappende Folien erfolgt und an der Überlappung die Ränder der Folien durch Verkleben gasundurchlässiger gemacht werden.

13. Verfahren nach Anspruch 1, dadurch gekennzeichnet, daß bei nur sehr geringem Austreten an Phosphingas während der Begasung im Anschluß an diese der Gasraum über den Vorräten abgesaugt und durch eine Gasreinigungsanlage zum Binden und/oder Zerstören des Phosphorwasserstoffs geleitet wird.

14. Feststoffkatalysator für die Zerstörung von Phosphorwasserstoff, dadurch gekennzeichnet, daß er mit einem Alkalijodid, vorzugsweise Kaliumjodid oder Natriumjodid imprägnierte Aktivkohle umfaßt.

15. Feststoffkatalysator nach Anspruch 14, dadurch gekennzeichnet, daß er 0,1 bis 4 Gew.-%, insbesondere 1 bis 2 Gew.-% an Kaliumjodid enthält.